# EUROPEAN PATENT APPLICATION

(11) **EP 4 495 554 A1**
(43) Date of publication of application: **22.01.2025**
(21) Application number: 23771079.3
(22) Date of filing: 15.03.2023
(51) Int. Cl.: G01D 11/30, G01B 11/02, F16M 13/02, F16M 11/06

(54) **MOUNTING UNIT AND SENSOR ASSEMBLY COMPRISING SAME**

(30) Priority: 15.03.2022 KR 20220032083
(71) Applicant: Autonics Corporation, Busan 48002 (KR)
(72) Inventor: PARK, Hyeok Lae, Bucheon-si Gyeonggi-do 14511 (KR); YANG, Jhong Suk, Seoul 07586 (KR)
(74) Representative: Frenkel, Matthias Alexander
(86) International application number: PCT/KR2023/003448
(87) International publication number: WO 2023/177200

(57) **Abstract**

A mounting unit according to an embodiment of the invention comprises: a base bracket having a plurality of fastening bosses extending therefrom; a tilt bracket tiltably coupled to the base bracket, and having a surface that a sensor is coupled to; at least one fixing screw having an end passing through the tilt bracket to closely contact the base bracket; a plurality of tilt screws penetrating the tilt bracket and inserted into the fastening bosses respectively, to connect the tilt bracket to the base bracket; and a tilt spring inserted on outer circumferences of the tilt screw and the fastening boss.

## Description

### CROSS-REFERENCE TO RELATED APPLICATIONS

The present application claims the benefits of priority to Korean Patent Application No. 10-2022-0032083, filed on March 15, 2022, of which its incorporated herein by reference in its entirety.

### Technical field

The present invention relates to a mounting unit for mounting a sensor and a sensor assembly having the same.

### Background

Light is periodically irradiated to a monitoring area (or scanning area) from a sensor, and the irradiated light is reflected from an object within the monitoring area and received by a sensor to measure the presence of the object or the distance to the object.

The sensor is mounted on a mounting unit to direct the light for scanning in the desired direction and angle.

The mounting unit is fixed to a ceiling or a wall, and the mounting unit is provided with a bracket for adjusting the horizontal and vertical angles at which the light from the sensor is irradiated.

In the case of the mounting unit for the sensor disclosed in the prior art below, there is a disadvantage that the horizontal direction of the light cannot be adjusted while the mounting unit is fixed on the wall. In other words, based on the x-axis extending in the horizontal direction, the y-axis extending in the vertical direction, and the z-axis extending in the horizontal direction but orthogonal to the x-axis, the mounting unit disclosed in the cited invention has the disadvantage that the sensor cannot be rotated left and right about the y-axis.

Prior art: DE202011050473U1 (Nov. 15, 2012)

### The summary

The present invention is proposed to improve the above problems.

A mounting unit according to an embodiment of the invention comprises: a base bracket having a plurality of fastening bosses extending therefrom; a tilt bracket tiltably coupled to the base bracket, and having a surface that a sensor is coupled to; at least one fixing screw having an end passing through the tilt bracket to closely contact the base bracket; a plurality of tilt screws penetrating the tilt bracket and inserted into the fastening bosses respectively, to connect the tilt bracket to the base bracket; and a tilt spring inserted on outer circumferences of the tilt screw and the fastening boss.

The tilt bracket comprises, a tilt bracket body and, a plurality of fastening ends extending from edges of the tilt bracket body, each fastening end having a through-hole, wherein the tilt screws are respectively inserted into the fastening bosses after passing through the through-holes.

One end of each of the tilt spring contacts the base bracket and the other end of the tilt spring contacts the fastening end.

One or more sensor fixing holes are formed in the tilt bracket body.

At least one supporting hole through which at least one fixing screw passe is formed in the tilt bracket body.

The base bracket is formed with a plurality of fastening holes.

The plurality of fastening holes are spaced apart at regular intervals in a circumferential direction of an imaginary circle having a predetermined radius.

The mounting unit further comprises a post bracket on which the base bracket is mounted.

The post bracket comprises, a receiving portion to which the base bracket is engaged; and a close contact portion that is bent at an edge of the receiving portion, wherein one or more fastening holes are formed in each of two side ends of the close contact portion.

A plurality of orientation holes are formed in the receiving portion, wherein the plurality of orientation holes are spaced apart at regular intervals in a circumferential direction of an imaginary circle having a predetermined radius.

The radius of the imaginary circle connecting the plurality of orientation holes is the same as the radius of the imaginary circle connecting the plurality of fastening holes, and wherein a circumferential distance of the adjacent orientation holes is equal to a circumferential distance of the adjacent fastening holes.

A sensor assembly according to the present invention comprises: a base bracket having a plurality of fastening bosses extending therefrom; a tilt bracket tiltably coupled to the base bracket, and having a surface that a sensor is coupled to; at least one fixing screw having an end passing through the tilt bracket to closely contact the base bracket; a plurality of tilt screws penetrating the tilt bracket and inserted into the fastening bosses respectively, to connect the tilt bracket to the base bracket; and a tilt spring inserted on outer circumferences of the tilt screw and the fastening boss; and a sensor coupled to a surface of the tilt bracket.

At least a portion of a surface of the sensor is formed with a bracket mounting face on which the tilt bracket is mounted, and wherein the bracket mounting surface is formed to be stepped from the surface of the sensor.

The tilt bracket is formed with a plurality of sensor fixing holes, and wherein the bracket mounting surface has a plurality of mating holes formed in alignment with the plurality of sensor fixing holes.

The sensor assembly further comprises a post bracket on which the base bracket is mounted.

According to the mounting unit of the present invention having the above configuration and the sensor assembly having the same, it has the advantage that the height rise can be minimized by the tilt bracket being engaged with the stepped structural part of the sensor.

Furthermore, it is possible to tilt the sensor with respect to three-axes while the sensor is coupled to the mounting unit, which has the advantage of securing a degree of freedom in the scanning direction.

Furthermore, in a state where the tilt angles of the tilt bracket body and the base bracket body are determined, by adjusting an insertion depth of the tilt screw so that the end of the fixing screw penetrates the support hole and contacts the base bracket body, the tilt angles of the tilt bracket body and the base bracket body are not changed even if an external force is applied to the tilt bracket.

### Brief description of the drawings

FIG. 1 is a front perspective view of a sensor assembly according to an embodiment of the present invention.
FIG. 2 is a bottom perspective view of the sensor assembly according to an embodiment of the present invention.
FIG. 3 is a bottom perspective view of a mounting unit according to an embodiment of the present invention.
Figure 4 is a bottom perspective view of a post bracket comprising a mounting unit according to an embodiment of the present invention.
Figure 5 is a bottom perspective view of a base bracket comprising a mounting unit according to an embodiment of the present invention.
Figure 6 is a bottom perspective view of a tilt bracket comprising a mounting unit according to an embodiment of the present invention.
Figure 7 is a perspective view of a sensor comprising a sensor assembly according to an embodiment of the present invention.
Figure 8 is a side view of the sensor.
FIG. 9 is a top view of the sensor assembly showing a window of the sensor facing left.
FIG. 10 is a top view of the sensor assembly showing a window of the sensor facing forward.
FIG. 11 is a top view of a sensor assembly showing a window of the sensor facing to the right.

### The detailed description

Hereinafter, a mounting unit for mounting a sensor according to an embodiment of the present invention and a sensor assembly having the same will be described in detail with reference to the drawings.

In one example, the sensor may be a laser scanner.

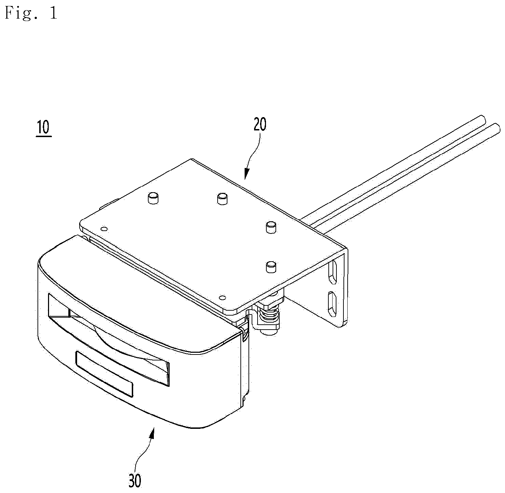

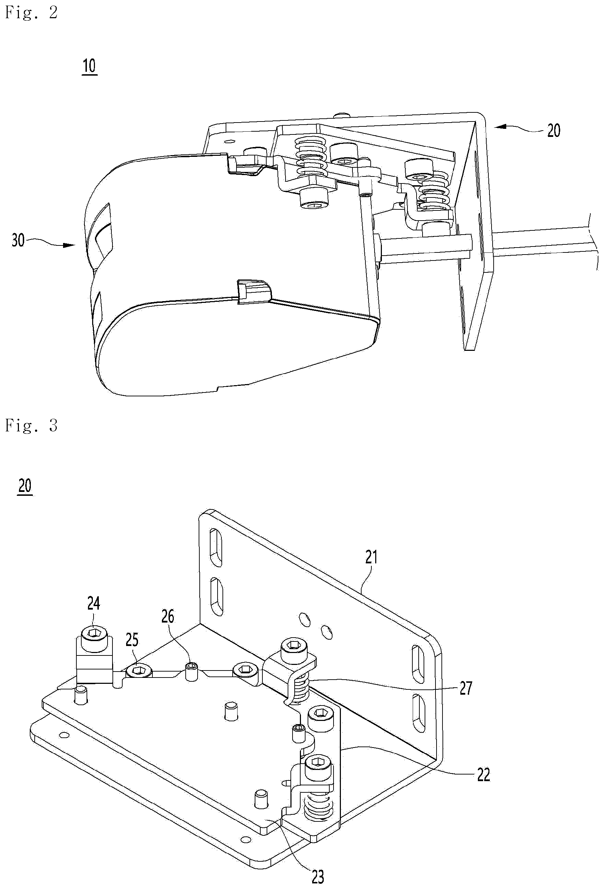

Fig. 1 is a front perspective view of a sensor assembly according to an embodiment of the present invention, and Fig. 2 is a bottom perspective view of the sensor assembly.

Referring to Figs. 1 and 2, a sensor assembly 10 according to an embodiment of the present invention includes a mounting unit 20, and a sensor 30 mounted on the mounting unit 20.

In detail, the mounting unit 20 may be mounted on a wall or a ceiling, and the sensor 30 is position-adjustable while coupled to the mounting unit 20 such that light is irradiated in a set direction.

Hereinafter, the structure of the mounting unit 20 and the method of adjusting the light irradiation direction of the sensor 30 will be described in detail with reference to the drawings.

FIG. 3 is a bottom perspective view of a mounting unit according to an embodiment of the present invention.

Referring to Fig. 3, the mounting unit 20 according to an embodiment of the present invention includes a post bracket 21 for fixing to a wall or a ceiling, a base bracket 22 coupled to the post bracket 21, and a tilt bracket 23 coupled to the base bracket 22.

In detail, the base bracket 22 is coupled to the post bracket 21 by a plurality of fastening screws 25. The tilt bracket 23 is coupled to the base bracket 22 by a tilt screw 24. And, the tilt bracket 23 is secured to the base bracket 22by a fixing screw 26 to prevent it from wobbling in a tilted state to a set angle.

Furthermore, a tilt spring 27 is inserted on an outer side of the tilt screw 24 to adjust the tilting angle of the tilt bracket 23.

In the following, each component constituting the mounting unit 20 will be described in detail with reference to the drawings.

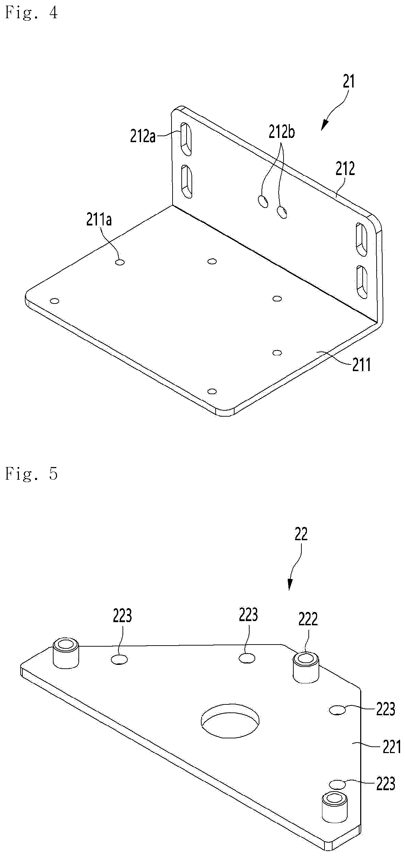

Fig. 4 is a bottom perspective view of a post bracket comprising a mounting unit according to an embodiment of the present invention.

Referring to Fig. 4, the post bracket 21 constituting the mounting unit 20 according to an embodiment of the present invention comprises a receiving portion 211 on which the base bracket 22 is placed, and a close contact portion 212 which is vertically bent at one end of the receiving portion 211 and is fixed to a wall surface.

In detail, a plurality of orientation holes 211a are formed in the mounting part 211, wherein the plurality of orientation holes 211a are arranged at regular intervals along a circumference of an imaginary circle having a predetermined radius. The plurality of orientation holes 211a may be six, but is not limited thereto.

Furthermore, a plurality of fastening holes 212a may be formed on each of both side edges of the contact portion 212. For example, two fastening holes 212a may be arranged in a row on each side edge. Furthermore, the two fastening holes 212a may comprise holes of various shapes, for example in the form of long holes. By having the fastening holes 212a in the form of long holes, the height of the post bracket 21 can be adjusted while a fastening member, such as a screw, is inserted through the fastening holes 212a and into the wall surface.

In one example, one or more cable pass-through holes 212b may be formed in the center of the fastening holes 212a.

Fig. 5 is a bottom perspective view of a base bracket comprising a mounting unit according to an embodiment of the present invention.

Referring to Fig. 5, the base bracket 22 constituting the mounting unit 20 according to the embodiment of the present invention comprises a base bracket body 221 that is fixed to the seating portion 211 of the post bracket 21, and a plurality of fastening bosses 222 protruding from a lower surface of the base bracket 221.

In detail, the base bracket body 221 may be formed into a polygonal shape, for example, in a triangular shape with three vertices cut off. As a more specific example, the base bracket body 221 may be formed in an isosceles triangle with two sides having the same length.

The fastening bosses 222 may protrude from the edges of the base bracket body 221, for example at the corners corresponding to the three cut vertices, respectively. The tilt spring 27 is fitted on the outer circumference of the fastening bosses 222.

In addition, a plurality of fastening holes 223 may be formed in the base bracket body 221. In one example, except for the post bracket 21, a fastening member such as a screw through the plurality of fastening holes 223 may be inserted into a wall or ceiling, so that the base bracket 22 may be directly fixed to the wall or ceiling.

In one example, the plurality of fastening holes 223 may be formed between adjacent fastening bosses 222.

In one example, among the three sides of an isosceles triangle, the fastening holes 223 may be formed on two sides having the same length. The plurality of fastening bosses 222 may include a first fastening boss located at an end of one of the two equal-length sides, a second fastening boss located at a point where the two equal-length sides meet, and a third fastening boss located at an end of the other of the two equal-length sides.

And, the plurality of fastening holes 223 may include two fastening holes formed between the first fastening boss and the second fastening boss, and two fastening holes formed between the second fastening boss and the third fastening boss. The plurality of fastening holes 223 may be defined as first to fourth fastening holes in the state of FIG. 5, in order from the leftmost formed hole.

The four fastening holes may be spaced at regular intervals along the circumference of an imaginary circle having a predetermined radius. The radius of the circle connecting the plurality of fastening holes 223 is the same as the radius of the circle connecting the orientation holes 211a formed in the seating portion 211 of the post bracket 21. Furthermore, the angle at which the plurality of fastening holes 223 are circumferentially spaced apart is the same as the angle at which the orientation holes 211a are circumferentially spaced apart. This structure allows the base bracket 22 to be circumferentially angularly adjustable when coupled to the mounting portion 211.

In other words, the mounting position of the base bracket 22 is determined depending on into which of the plurality of mating holes 223 the mating screws 25 penetrating the plurality of orientation holes 211a are inserted.

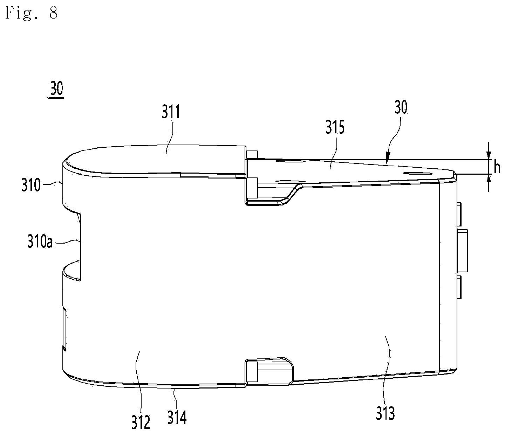

Among the three edges of the base bracket 22, the edge on which the fastening holes 223 are not located, the so-called orientation edge, is the edge on which the window 310a of the sensor 30 (see Figure 8) is located. The alignment of the orientation holes 211a and the fastening holes 223 determines the position of the orientation edge, which in turn determines the orientation direction of the window. In another example, fastening holes may also be formed on the orientation edge.

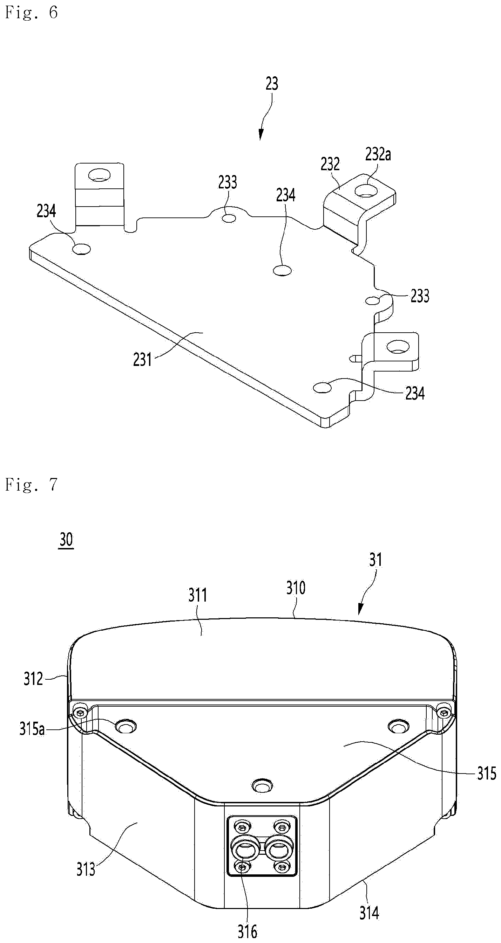

Fig. 6 is a bottom perspective view of a tilt bracket comprising a mounting unit according to an embodiment of the present invention.

Referring to Fig. 6, the tilt bracket 23 according to an embodiment of the present invention may comprise a tilt bracket body 231 and a plurality of fastening ends 232 bent and extending from an edge of the tilt bracket body 231.

In detail, the tilt bracket body 231, similar to the base bracket 22, may be formed in a polygonal shape, for example, an isosceles triangle with three vertices truncated.

In one example, the plurality of fastening ends 232 may include a first fastening end extending from a point corresponding to a first end of one of the two sides having the same length, a second fastening end extending from a point corresponding to a corner where the other ends of the two sides having the same length meet, and a third fastening end extending from a point corresponding to a second end of the other of the two sides having the same length.

Based on Fig. 6, a fastening end extending from a left edge of the tilt bracket body 231 may be defined as a first fastening end, a fastening end extending from a right edge of the tilt bracket body 231 may be defined as a third fastening end, and a fastening end extending from a corner where the two sides having the same length meet may be defined as a second fastening end.

Each of the plurality of fastening ends 232 may comprise a vertical extension extending a predetermined length in a direction orthogonal to the tilt bracket body 231, and a horizontal extension extending from an end of the vertical extension in a direction parallel to the tilt bracket body 231 but extending in an outward direction of the tilt bracket body 231. And, a through-hole 232a is formed in the horizontal extension end.

With one end of the tilt spring 27 embedded in the outer side of the fastening boss 222 of the base bracket 22, the tilt screw 24 is inserted into the fastening boss of the base bracket 22 after passing through the through-hole 232a. Then, the tilt screw 24 and the fastening boss 222 are positioned on an inner side of the tilt spring 27.

In addition, a thread is formed on each of the inner circumferential surface of the fastening boss 222 and the outer circumferential surface of the tilt screw 24, such that the length by which the tilt screw 24 is inserted into the fastening boss 222 is adjustable, and the length of the tilt spring 27 is reduced as the tilt screw 24 is inserted into the fastening boss 222.

One end of the tilt spring 27 closely contacts the base plate 22, and the other end is closely contacts a horizontal extension of the fastening end 232. Further, the other end of the tilt spring 27 is configured to press the horizontal extension such that the horizontal extension closely contacts the head of the tilt screw 24.

Furthermore, when the tilt screws 24 penetrating the fastening ends 232 are inserted into the fastening bosses 222 at the same depth, the sensor 300 will move in an up and down direction while maintaining a parallel state to the tilt bracket body 231. On the other hand, when the insertion depth of any one of the tilt screws 24 is adjusted differently from the insertion depth of the rest of the tilt screws 24, the sensor 30 is tilted away from the tilt bracket body 231 at a predetermined angle.

Furthermore, support holes 233 are formed in edges of the tilt bracket body 231 corresponding to the areas between the adjacent fastening ends 232. The support holes 233 may be formed respectively on the edges of the tilt bracket body 231 corresponding to two sides having the same length, and the distances from the support hole 233 to the adjacent fastening ends 232 may be equal, but not limited to. In addition, the distance from the second through-hole 232a to each of the two support holes 233 may be designed to be equal.

The fixing screw 26 penetrates the support holes 233 and contacts the lower surface of the base bracket body 221. A thread is formed on each of the inner circumferential surface of the support hole 233 and the outer circumferential surface of the fixing screw 26, so that the degree of insertion of the fixing screw 26 can be adjusted.

In a state where an inclination angle of the tilt bracket body 231 and the base bracket body 221 is determined by adjusting the insertion depth of at least one of the three tilt screws 24, an end of the fixing screw 26 may penetrate the support hole 233 to contact the base bracket body 221. Then, even if an external force is applied to the tilt bracket 23, the inclination angle of the tilt bracket body 231 and the base bracket body 221 does not change.

For example, when an external force is applied to the tilt bracket 23 in the direction of the tilt bracket 23 moving away from the base bracket 22, the tilt bracket 23 will not be separated from the base bracket 22 by the fastening force of the tilt screw 24 and the fastening boss 222.

Conversely, if an external force is applied to the tilt bracket 2 in the direction of the tilt bracket 23 approaching the base bracket 22, the tilting state of the tilt bracket 23 and the base bracket 22 is not changed by the fixing screw 26.

Meanwhile, one or more sensor fixing holes 234 may be formed in the tilt bracket body 231. The sensor fixing hole 234 is a hole through which a fastening member connecting the tilt bracket 23 and the sensor 30 penetrates. A single sensor fixing hole 234 may be formed in the center of the tilt bracket body 231, or, as shown in FIG. 6, three sensor fixing holes 234 may be formed at positions adjacent to three corners of the tilt bracket body 231, respectively.

Fig. 7 is a perspective view of a sensor comprising a sensor assembly according to an embodiment of the present invention, and Fig. 8 is a side view of the sensor.

Referring to Figs. 7 and 8, the sensor 30 may comprise a front surface 310, an upper surface 311, side surfaces 312, a rear surface 313, and a lower surface 314. Further, a window 310a is formed on the front surface 311, and light is irradiated through the window 310a to the outside.

In detail, a cable port 316 may be formed at a center of the rear surface 313 of the sensor 30, and a cable extending from the cable port 316 may extend through a cable pass-through hole 212b of the post bracket 21.

A bracket mounting surface 315 may be formed on an upper or lower surface of the sensor 30, the bracket mounting surface 315 may be formed a predetermined depth h step from the upper surface of the sensor 30.

The depth h at which the bracket mounting surface 315 steps down may be a length corresponding to a thickness of the tilt bracket body 231 that is coupled to the bracket mounting surface 315. By having the bracket mounting surface 315 stepped by the thickness of the tilt bracket body 231, the sensor assembly 10 may be compactly designed without increasing the overall thickness of the sensor assembly 10.

Further, the bracket mounting surface 315 may be formed with a plurality of fastening holes 315a that align with a plurality of the sensor fastening holes 234.

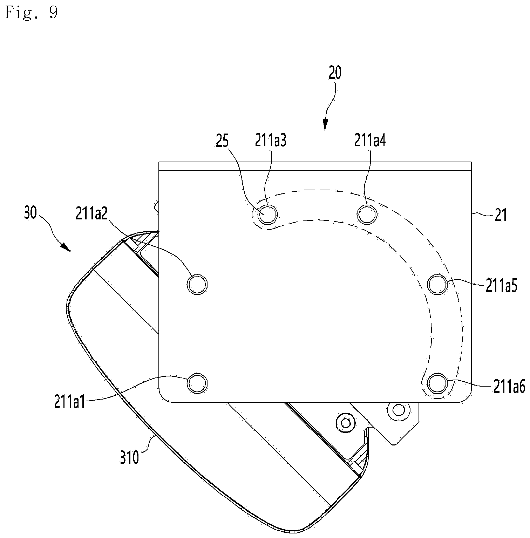

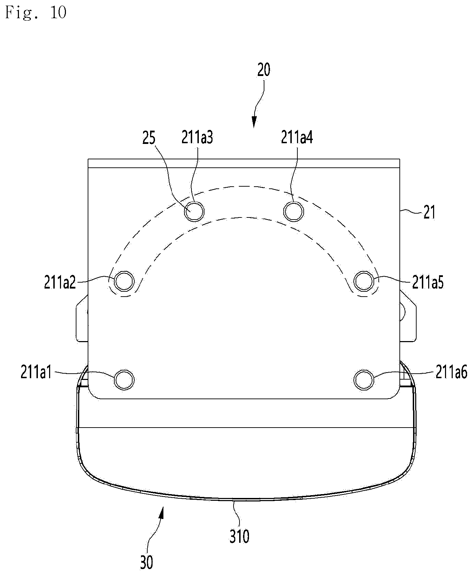

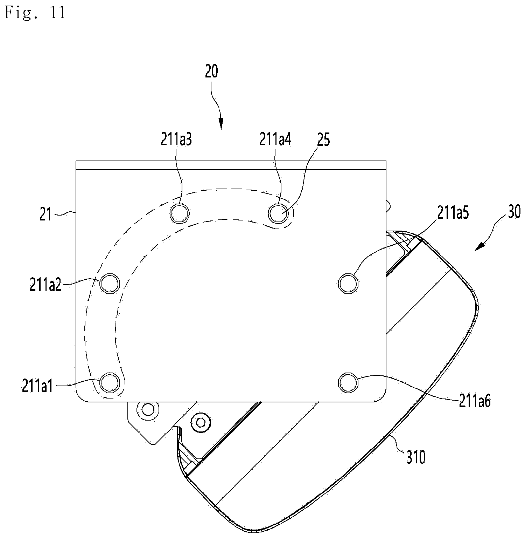

Fig. 9 is a perspective view of a sensor assembly showing a window of the sensor facing left, Fig. 10 is a perspective view of a sensor assembly showing a window of the sensor facing forward, and Fig. 11 is a perspective view of a sensor assembly showing a window of the sensor facing right.

Referring to FIGS. 9 to 11, the orientation holes 211a formed in the post bracket 21 may be defined as a first orientation hole 211a1, a second orientation hole 211a2, a third orientation hole 211a3, a fourth orientation hole 211a4, a fifth orientation hole 211a5, and a sixth orientation hole 211a6 in a circumferential direction from the left edge.

When the fastening screw 25 penetrates the first fastening hole formed at the left end and the second orientation hole 211a2 among the fastening holes 233 of the base bracket 22, the window 310a faces forward as shown in FIG. 10.

When the fastening screw 25 penetrates the first fastening hole formed at the left end and the third orientation hole 211a3 among the fastening holes 233 of the base bracket 22, the window 310a faces to the left, as shown in FIG. 9.

And when the fastening screw 25 penetrates the first fastening hole formed at the left end and the first orientation hole 211a1 among the fastening holes 233 of the base bracket 22, the window 310a faces to the right, as shown in FIG. 11.

Here, by further increasing the number of the orientation holes 211a or decreasing the number of the fastening holes 223, the orientation angle of the window 310a can be varied more finely. The orientation angle of the window 310a can be understood to mean the amount of clockwise or counterclockwise rotation about the y-axis, i.e., the vertical axis through the center of the tilt bracket body 231. And, as the circumferential spacing of neighboring orientation holes 211a decreases by further increasing the number of the orientation holes 211a, the unit amount of rotation of the window 310a around the y-axis decreases, and thus, it is advantageous to be able to more finely adjust the orientation angle of the sensor 30.

## Claims

1. A mounting unit, comprising:
A base bracket having a plurality of fastening bosses extending therefrom;
a tilt bracket tiltably coupled to the base bracket, and having a surface that a sensor is coupled to;
at least one fixing screw having an end passing through the tilt bracket to closely contact the base bracket;
a plurality of tilt screws penetrating the tilt bracket and inserted into the fastening bosses respectively, to connect the tilt bracket to the base bracket; and
a tilt spring inserted on outer circumferences of the tilt screw and the fastening boss.

2. The mounting unit according to claim 1, wherein the tilt bracket comprises,
a tilt bracket body and,
a plurality of fastening ends extending from edges of the tilt bracket body, each fastening end having a through-hole,
wherein the tilt screws are respectively inserted into the fastening bosses after passing through the through-holes.

3. The mounting unit according to claim 2, wherein one end of each of the tilt spring contacts the base bracket and the other end of the tilt spring contacts the fastening end.

4. The mounting unit according to claim 2, wherein one or more sensor fixing holes are formed in the tilt bracket body.

5. The mounting unit according to claim 2, at least one supporting hole through which at least one fixing screw passe is formed in the tilt bracket body.

6. The mounting unit according to claim 1, wherein the base bracket is formed with a plurality of fastening holes.

7. The mounting unit according to claim 6, wherein the plurality of fastening holes are spaced apart at regular intervals in a circumferential direction of an imaginary circle having a predetermined radius.

8. The mounting unit according to claim 7, further comprising a post bracket on which the base bracket is mounted.

9. The mounting unit according to claim 8, wherein the post bracket comprises,
a receiving portion to which the base bracket is engaged; and
a close contact portion that is bent at an edge of the receiving portion,
wherein one or more fastening holes are formed in each of two side ends of the close contact portion.

10. The mounting unit according to claim 9, wherein a plurality of orientation holes are formed in the receiving portion,
wherein the plurality of orientation holes are spaced apart at regular intervals in a circumferential direction of an imaginary circle having a predetermined radius.

11. The mounting unit according to claim 10, wherein the radius of the imaginary circle connecting the plurality of orientation holes is the same as the radius of the imaginary circle connecting the plurality of fastening holes,
and wherein a circumferential distance of the adjacent orientation holes is equal to a circumferential distance of the adjacent fastening holes.

12. A sensor assembly, comprising:
A base bracket having a plurality of fastening bosses extending therefrom;
a tilt bracket tiltably coupled to the base bracket, and having a surface that a sensor is coupled to;
at least one fixing screw having an end passing through the tilt bracket to closely contact the base bracket;
a plurality of tilt screws penetrating the tilt bracket and inserted into the fastening bosses respectively, to connect the tilt bracket to the base bracket; and
a tilt spring inserted on outer circumferences of the tilt screw and the fastening boss; and
a sensor coupled to a surface of the tilt bracket.

13. The sensor assembly according to claim 12, wherein at least a portion of a surface of the sensor is formed with a bracket mounting face on which the tilt bracket is mounted,
and wherein the bracket mounting surface is formed to be stepped from the surface of the sensor.

14. The sensor assembly of claim 12, wherein the tilt bracket is formed with a plurality of sensor fixing holes,
And wherein the bracket mounting surface has a plurality of mating holes formed in alignment with the plurality of sensor fixing holes.

15. The sensor assembly according to claim 12, further comprising a post bracket on which the base bracket is mounted.
